# EUROPEAN PATENT SPECIFICATION

(11) **EP 3 940 438 B1**
(45) Date of publication and mention of the grant of the patent: **27.08.2025**
(21) Application number: 19920189.8
(22) Date of filing: 20.12.2019
(51) Int. Cl.: G02B 6/42

(54) **OPTICAL MODULE**
OPTISCHES MODUL
MODULE OPTIQUE

(30) Priority: 15.03.2019 CN 201910199334; 15.03.2019 CN 201910199347; 15.03.2019 CN 201910199953
(43) Date of publication of application: 19.01.2022
(73) Proprietor: Hisense Broadband Multimedia Technologies Co., Ltd., Economic and Technical Development Zone Qingdao Shandong 266555 (CN)
(72) Inventor: DU, Guangchao, Qingdao, Shandong 266555 (CN); TANG, Yongzheng, Qingdao, Shandong 266555 (CN); WU, Tao, Qingdao, Shandong 266555 (CN); MU, Jianwei, Qingdao, Shandong 266555 (CN); SUI, Shaoshuai, Qingdao, Shandong 266555 (CN); HAN, Jihong, Qingdao, Shandong 266555 (CN); CHEN, Sitao, Qingdao, Shandong 266555 (CN); SHAO, Qian, Qingdao, Shandong 266555 (CN)
(74) Representative: Casalonga
(86) International application number: PCT/CN2019/127211
(87) International publication number: WO 2020/186862

(56) References cited:
- CN-A- 105 259 623
- CN-A- 106 019 496
- CN-A- 107 688 217
- CN-A- 108 548 102
- CN-A- 109 407 231
- US-A1- 2016 112 137
- US-A1- 2017 227 721
- US-A1- 2018 359 033
- US-A1- 2018 359 033
- US-B1- 10 222 474
- US-B2- 9 995 892

## Description

The disclosure claims the priority to Chinese Patent Application No. 201910199334.9, filed on 15 March 2019, and Chinese Patent Application No. 201910199347.6, filed on 15 March 2019, and Chinese Patent Application No. 201910199953.8, filed on 15 March 2019.

### TECHNICAL FIELD

The disclosure relates to the field of optical fiber communication, and in particular, to an optical module.

### BACKGROUND

At present, the use of a silicon optical chip to achieve the interconversion between an optical signal and an electrical signal has become a mainstream solution adopted by a high-speed optical module. In an optical module with the silicon optical chip, the silicon optical chip is arranged on a surface of a circuit board and is electrically connected to the circuit board by means of wire bonding; the silicon optical chip is connected to an optical interface of the optical module through an optical fiber ribbon, so that optical signals may enter and exit the silicon optical chip. Since the silicon material used in the silicon optical chip is not an ideal luminescent material for the laser chip, and a light-emitting unit cannot be integrated in the manufacturing process of the silicon optical chip, the silicon optical chip needs to be provided with light from an external light source.

US 2016/0112137 A1 provides an optical transmitter that includes an RF signal path that is, at least partially, parallel with an optical signal path. In one embodiment, an electrical transmission element, which defines the RF signal path, is disposed between a laser emitting the optical signal and a side wall of a package containing the optical transmitter. Although the RF and optical signals may propagate along different planes within the optical transmitter, both signals are received at an optical modulator. Using the RF signal, the optical modulator modulates the optical signal (e.g., a continuous wave) to generate a modulated optical signal. The optical modulator then outputs the modulated signal to a receptacle coupled to a light carrying medium such as a fiber optic cable.

### SUMMARY

The invention provides an optical module which is defined by claim 1.

Further advantageous embodiments of the present disclosure are indicated in the dependent claims.

### BRIEF DESCRIPTION OF THE DRAWINGS

The following will briefly introduce the drawings used in the description of the embodiments or the prior art. Obviously, the accompanying drawings to be described below are merely some embodiments of the present disclosure, and a person of ordinary skill in the art can obtain other drawings according to these drawings without paying any creative effort.
FIG. 1 is a schematic diagram showing a connection relationship of an optical communication terminal;
FIG. 2 is a schematic diagram showing a structure of an optical network unit;
FIG. 3 is a schematic diagram showing a structure of an optical module, in accordance with embodiments of the present disclosure;
FIG. 4 is a schematic exploded view showing a structure of an optical module, in accordance with embodiments of the present disclosure;
FIG. 5 is a schematic diagram showing an assembly relationship of the circuit board, the silicon optical chip, and the laser box, in accordance with some embodiments of the present disclosure;
FIG. 6 is a schematic diagram showing an exploded structure of an assembly relationship between a silicon optical chip and a laser box, in accordance with some embodiments of the present disclosure;
FIG. 7 is a schematic diagram showing another exploded structure of an assembly relationship between a silicon optical chip and a laser box, in accordance with some embodiments of the present disclosure
FIG. 8 is a schematic diagram showing a structure relationship between a silicon optical chip and a laser box, in accordance with some embodiments of the present disclosure;
FIG. 9A is a schematic diagram showing an optical coupling relationship between a silicon optical chip and a laser box, in accordance with some embodiments of the present disclosure;
FIG. 9B is a cross-sectional view of an optical coupling relationship between a silicon optical chip and a laser box, in accordance with some embodiments of the present disclosure;
FIG. 10A is a schematic diagram of an optical path structure of a laser box, in accordance with some embodiments of the present disclosure;
FIG. 10B is a schematic diagram of an optical path structure of another laser box, in accordance with some embodiments of the present disclosure;
FIG. 11 is a schematic diagram showing an exploded structure of a laser box, in accordance with some embodiments of the present disclosure;
FIG. 12 is a schematic diagram showing another exploded structure of a laser box, in accordance with some embodiments of the present disclosure;
FIG. 13 is a schematic cross-sectional view of a laser box, in accordance with some embodiments of the present disclosure.

### DETAILED DESCRIPTION

Technical solutions in the embodiments of the present disclosure will be described clearly and completely below with reference to the accompanying drawings in the embodiments of the present disclosure. Obviously, the described embodiments are merely some but not all embodiments of the present disclosure. All other embodiments obtained by a person of ordinary skill in the art on the basis of the embodiments of the present disclosure without paying any creative effort shall be included in the protection scope of the present disclosure.

Signals are realized to be transmitted in optical communication by adopting two different carriers, namely electricity and light. An optical signal carrying information is transmitted in an optical waveguide for optical fiber communication, and the information transmission with low-cost and low-loss can be realized by utilizing the passive transmission characteristic of light in the optical waveguide such as an optical fiber. While an information processing device such as a computer uses an electrical signal, so it is necessary to realize the interconversion between the electrical signal and the optical signal in an optical fiber communication system.

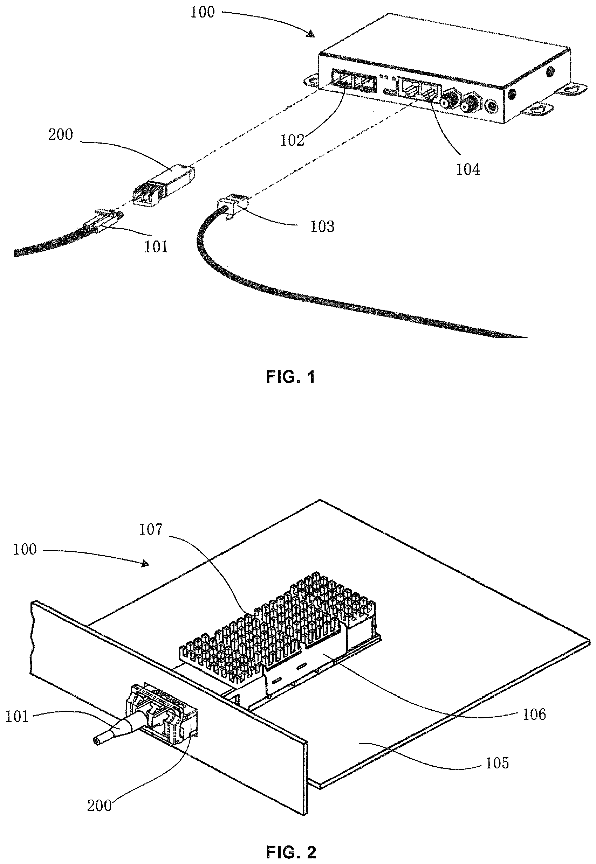

FIG. 1 is a schematic diagram showing a connection relationship of an optical communication terminal. As shown in FIG. 1, connection components of the optical communication terminal mainly includes an optical network unit 100, an optical module 200, an optical fiber 101, and a network cable 103.

One end of the optical fiber is connected to a remote server, and one end of the network cable is connected to a local information processing device; connection between the local information processing device and the remote server is implemented with the optical fiber and the network cable; and connection between the optical fiber and the network cable is implemented by the optical network unit with the optical module.

An optical port of the optical module 200 is accessed to the optical fiber 101 to establish bidirectional optical signal connection with the optical fiber 101; and an electrical port of the optical module 200 is accessed to the optical network unit 100 to establish bidirectional electrical signal connection with the optical network unit 100. Interconversion between the optical signal and the electrical signal is achieved by the optical module 200, so that connection between the optical fiber 101 and the optical network unit 100 is established. In practical applications, the optical signal from the optical fiber 101 is converted into an electrical signal by the optical module 200 and then transmitted into the optical network unit 100, and the electrical signal from the optical network unit 100 is converted into an optical signal by the optical module 200 and then transmitted into the optical fiber 101. Since the optical module 200 is a tool for achieving the interconversion between the optical signal and the electrical signal, and has no function of processing a data, the information does not change in the above photoelectric conversion process.

The optical network unit has an optical module interface 102, which is configured to access the optical module and establish bidirectional electrical signal connection with the optical module; the optical network unit has a network cable interface 104, which is configured to access the network cable and establish bidirectional electrical signal connection with the network cable; and connection between the optical module and the network cable is established through the optical network unit. In practical applications, the optical network unit 100 may transmit a signal from the optical module 200 to the network cable 103, and transmit a signal from the network cable 103 to the optical module 200. Therefore, the optical network unit 100, as a master monitor of the optical module 200, may monitor operation of the optical module 200.

A bidirectional signal transmission channel between the remote server and the local information processing device has been established through the optical fiber, the optical module, the optical network unit, and the network cable.

In the above solutions, the information processing device includes a router, a switch, an electronic computer, etc.; the optical network unit, as the master monitor of the optical module, may provide a data signal to the optical module and receive a data signal from the optical module. In addition, the master monitor of the optical module 200 may further include an optical line terminal (OLT).

FIG. 2 is a schematic diagram showing a structure of an optical network unit. As shown in FIG. 2, the optical network unit 100 has a circuit board 105, and a cage 106 is provided on a surface of the circuit board 105; an electrical connector is provided in the cage 106 for accessing the electrical port of optical module such as a connecting finger. A heat sink 107 is provided on the cage 106, and the heat sink 107 has protruding structures such as fins capable of increasing a heat dissipation area.

The optical module 200 is inserted into the optical network unit 100, that is, the electrical port of the optical module is connected to the electrical connector in the cage 106, and the optical port of the optical module is connected to the optical fiber 101.

The cage 106 is located on the circuit board, and the electrical connector on the circuit board is wrapped in the cage; the optical module 200 is inserted into the cage 106, and the optical module 200 is fixed by the cage 106. The heat generated by the optical module 200 can be conducted to the cage 106 through shell of the optical module, and then diffused through the heat sink 107 on the cage. Generally, an upper shell of the optical module 200 is closer to the heat sink 107 on the cage than a lower shell of the optical module. With the aid of the heat sink, the upper shell of the optical module 200 can achieve more efficient heat dissipation than the lower shell. For components in the optical module 200, they can be better cooled if heat is conducted to the upper shell of the optical module.

An optical module plays a key role in photoelectric conversion in the above-mentioned optical communication connections. At present, a silicon-based optoelectronic chip packaging method is gradually maturing in the optical module industry, which combines silicon-based integrated circuit technology with optical waveguide technology, and produces chips with integrated photoelectric conversion function and electro-optical conversion function by chip growth manufacturing process. However, since the silicon material used in the silicon optical chip is not an ideal luminescent material for the laser chip, and the light-emitting unit cannot be integrated in the manufacturing process of the silicon optical chip, the silicon optical chip needs to be provided with a light from an external light source.

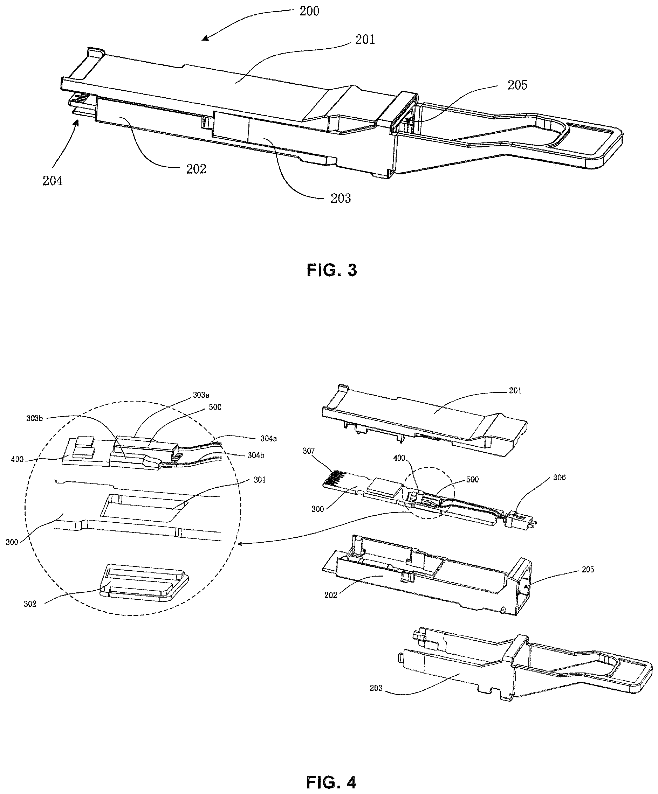

In order to provide an external light source for the silicon optical chip in the optical module, the disclosure provides an optical module, which will be further described below with reference to FIGS. 3 to 11. FIG. 3 is a schematic diagram showing a structure of an optical module, in accordance with embodiments of the disclosure. FIG. 4 is a schematic exploded view showing a structure of an optical module, in accordance with embodiments of the disclosure.

As shown in FIG. 3 and FIG. 4, the optical module 200 provided by the embodiments of the disclosure includes an upper shell 201, a lower shell 202, an unlocking handle 203, a circuit board 300, a base, a silicon optical chip 400, a laser box 500, optical fibers 304a and 304b, and an optical fiber interface 306, the silicon optical chip 400 and the laser box 500 are respectively arranged on a same side surface of the circuit board 300.

The upper shell 201 and the lower shell 202 form a wrapping cavity with two openings. The two openings may be openings at both ends of the optical module in a same direction, or may be two openings in different directions; one of the openings is an electrical port 204, which is used for the optical is module to insert into the master monitor such as the optical network unit, and the other opening is an optical port 205 for accessing external optical fiber, so that external fiber is connected to an internal optical fiber. The circuit board 300, the silicon optical chip 400, and the laser box 500 and other optoelectronic components are located in the wrapping cavity.

The upper shell 201 and the lower shell 202 are made of a metal material to facilitate electromagnetic shielding and heat dissipation. The assembly mode of combining the upper shell 201 and the lower shell 202 is adopted, which is convenient to install the circuit board 300 and other components into the wrapping cavity. In this disclosure, the upper shell 201 and the lower shell 202 form a wrapping cavity, which can facilitate the deployment of positioning components, heat dissipation structures and electromagnetic shielding structures when assembling components such as the circuit board 300, and is conducive to automated production. The unlocking handle 203 is located on an outer wall of the lower shell 202, and pulling a tail end of the unlocking handle 203 may move the unlocking handle 203 on the outer wall of the lower shell 202. When the optical module is inserted into the master monitor, the optical module 200 is engaged with the cage 106 of the master monitor by the unlocking handle 203, and pulling the unlocking handle 203 may release the engagement between the optical module and the master monitor, so that the optical module may be drawn out of the cage 106 of the master monitor.

A bottom surface of the silicon optical chip 400 and a bottom surface of the laser box 500 are respectively disposed on the base, and there is an optical connection between the silicon optical chip 400 and the laser box 500. Since a light propagation path is very sensitive to a positional relationship between the silicon optical chip 400 and the laser box 500, and material with different thermal expansion coefficients may cause deformations to different degrees, it is not conducive to the realization of a preset optical path. Therefore, in the embodiment of the disclosure, the silicon optical chip 400 and the laser box 500 are disposed on the same base, and the base of a same material is deformed, which will equally affect the positions of the silicon optical chip 400 and the laser box 500, and reduce the change of the relative positions of the silicon optical chip 400 and the laser box 500 caused by deformation. Optionally, a thermal expansion coefficient of the material of the base is similar to a thermal expansion coefficient of a material of the silicon optical chip 400 and/or the laser box 500. For example, if the main material of the silicon optical chip is silicon, and the main material of the laser box is Kovar metal, the substrate may be made of silicon or glass.

There are various positional relationships between the base and the circuit board 300, and one, according to the claimed invention, of which is shown in FIG. 4. The circuit board 300 is provided with an opening 301 penetrating upper and lower surfaces of the circuit board 300, and the silicon optical chip 400 and the laser box 500 are disposed in the opening. The silicon optical chip 400 and/or the laser box 500 can dissipate heat simultaneously toward the upper and lower surfaces of the circuit board 300. The base 302 is disposed on a side of the circuit board 300, and the silicon optical chip 400 and/or laser box 500 pass through the opening of the circuit board 300 to dissipate heat to the base, so that the base 302 has both an effect of supporting and dissipating heat. In another way, not according to the claimed invention, the circuit board 300 is provided with no opening, and the base is disposed on the circuit board. Specifically, the base may be provided on a surface of the circuit board or embedded in the circuit board, so that the silicon optical chip 400 and the laser box 500 are disposed on a surface of the base.

To achieve optical coupling between the silicon optical chip 400 and the laser box 500, a light exit surface of the laser box 500 and a light incidence surface of the silicon optical chip 400 need to be at a same height. Since the silicon optical chip 400 is manufactured by using a chip growth and etching process, it has a high degree of integration and a relatively small volume; while the volume of the laser box 500 is relatively large, and the height of the side surface of the laser box 500 is greater than that of the side surface of the silicon optical chip 400. Therefore, it is necessary to provide a groove 308 on the base to set the laser box 500 in the groove 308. The silicon optical chip 400 is disposed on a surface of the base, and the surface of the base is relatively higher than the groove 308, so as to balance a height difference between the silicon optical chip 400 and the laser box 500.

A surface of an end of the circuit board 300 has a connecting finger 307, the connecting finger 307 is composed of a plurality of pins separated from each other. The circuit board 300 is inserted into the electrical connector in the cage 106, and is electrically connected to a clamping elastic sheet in the electrical connector through the connecting finger 307. In an implementation, the connecting finger 307 may be disposed on only one surface of the circuit board. Considering that the number of pins is relatively large, the connecting finger 307 may also be disposed on both upper and lower surfaces of the circuit board. The connecting finger 307 is configured to establish electrical connection with the master monitor, and the electrical connection may be used to achieve power supply, grounding, an I2C communication, data signal communication, etc.

In the technical solution provided in the disclosure, the bottom surface of the laser box 500 is disposed on the base 302. The laser box 500 emits light through its side surface, and the light emitted by the laser box 500 enters the silicon optical chip 400. The laser box 500 provides light with a single wavelength, stable power and no data to the silicon optical chip 400, and the silicon optical chip 400 modulates the light to load data that needs to be transmitted into the light.

The bottom surface of the silicon optical chip 400 is disposed on the base 302, and a side surface of the silicon optical chip 400 receives light from the laser box 500. Both the modulation of the emitted light and the demodulation of the received light are completed by the silicon optical chip 400. A surface of the silicon optical chip 400 is provided with bonding pads that are electrically connected to the circuit board 300 by means of wire bonding; in one implementation, the circuit board 300 provides the silicon optical chip 400 with a data signal from the master monitor, and the data signal is modulated into light by the silicon optical chip 400. The external optical signal is demodulated into an electrical signal by the silicon optical chip 400, and then the electrical signal is output to the master monitor through the circuit board 300.

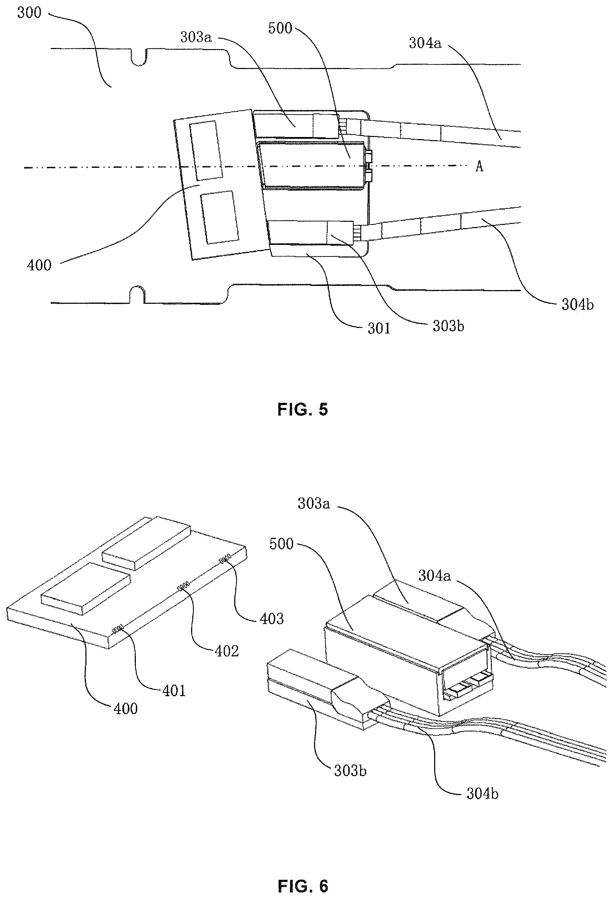

A plurality of optical fibers of the silicon optical chip 400 are combined into an optical fiber ribbon, and the optical fiber ribbon is connected with an optical fiber connector and an optical fiber interface 306. The optical fiber connector is connected to the silicon optical chip 400, and the optical fiber interface is used to connect to an external optical fiber. As shown in FIG. 5, the optical fiber connector 303a is connected to the optical fiber ribbon 304a, the optical fiber connector 303b is connected to the optical fiber ribbon 304b, and the optical fiber ribbon 304a and the optical fiber ribbon 304b are respectively connected to the optical fiber interface 306. The optical fiber connector 303a is used to transmit the emitted light from the silicon optical chip 400 to the optical fiber interface 306, and the optical fiber connector 303b is used to transmit the received light transmitted from the optical fiber interface 306 to the silicon optical chip 400.

The light emitted by the laser box 500 enters the silicon optical chip 400, is modulated into an optical signal by the silicon optical chip 400, and then is transmitted to the optical fiber interface 306 through the optical fiber array 303a, thereby realizing the optical transmission process of the optical module. The external light is transmitted to the silicon optical chip 400 through the optical fiber interface 306 and the optical fiber connector 303b, and an electrical signal is demodulated by the silicon optical chip 400, and then the electrical signal is output to the master monitor to realize the light receiving process of the optical module.

In order to achieve the above modulation and demodulation processes of the optical signal, there is a need to assemble the circuit board 300, the silicon optical chip 400 and the laser box 500 according to predetermined positions to form a predetermined optical propagation path in the present disclosure.

FIG. 5 is a schematic diagram showing an assembly relationship of the circuit board 300, the silicon optical chip 400, and the laser box 500, in accordance with some embodiments of the present disclosure. As shown in FIG. 5, in a feasible scheme, the silicon optical chip 400 and the laser box 500 are disposed in the opening 301 of the circuit board at a same height level, so that the side surface of the laser box 500 is optically coupled to the side surface of the silicon optical chip 400.

In addition, the silicon optical chip 400 is optically coupled with the optical fiber connector 303a and the optical fiber connector 303b, respectively. One end of the optical fiber array 303a is optically coupled to the silicon optical chip 400, and the other end thereof is connected to the optical fiber ribbon 304a. One end of the optical fiber array 303b is optically coupled to the silicon optical chip 400, and the other end thereof is connected to the optical fiber ribbon 304b. The optical fiber connectors 303a, 303b and the laser box 500 are disposed on a side of the silicon optical chip 400 at a same height level, and the optical fiber ribbons 304a, 304b are located on a same side surface of the circuit board.

The axial direction of the laser box 500 is in a non-vertical angular relationship with the side surface at the coupling position of the silicon optical chip 400, that is, the silicon optical chip 400 is inclined relative to the laser box 500, and the side surface of the laser box 500 coupled with the silicon optical chip 400 is an inclined plane. In addition, the side surfaces of the two optical fiber connectors 303a, 303b coupled with the silicon optical chip 400 are inclined planes, and the side surface of the silicon optical chip 400 coupled with the laser box 500 and the optical fiber connectors is a plane, and the plane is parallel to the side surface of the laser box 500.

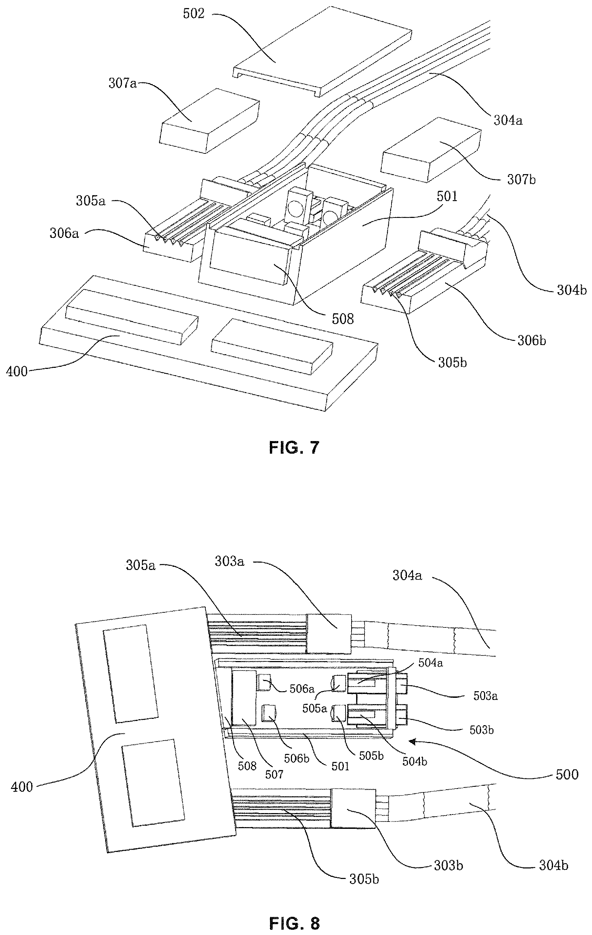

FIG. 6 is a schematic diagram showing an exploded view of an assembly relationship between a silicon optical chip and a laser box, in accordance with some embodiments of the present disclosure, and FIG. 7 is a schematic diagram showing another exploded view of an assembly relationship between a silicon optical chip and a laser box, in accordance with some embodiments of the present disclosure. As shown in FIG. 6 and FIG. 7, in order to achieve the above-mentioned optical coupling relationship, a side surface of the silicon optical chip 400 has a first optical waveguide end facet 401, a second optical waveguide end facet 402, and a third optical waveguide end facet 403, and each optical waveguide end facet is corresponding to a plurality of optical channels. The first optical waveguide end facet 401 is optically coupled to the optical fiber connector 303b; the second optical waveguide end facet 402 is optically coupled to the laser box 500. Optionally, the second optical waveguide end facet has two or more optical channels that receive light of a same wavelength. The third optical waveguide end facet 403 is coupled to the optical fiber connector 303a, and the optical waveguide end facets are disposed on a side surface of the silicon optical chip 400, so that the coupling position relationship between the laser box 500, the optical fiber connectors and the silicon optical chip 400 is changed, and the structure of the laser box 500 is changed at a same time. The optical fiber connector 303a has a plurality of optical fibers 305a for docking with the third optical waveguide end facet 403. The optical fiber connector 303b has a plurality of optical fibers 305b for docking with the first optical waveguide end facet 401. And the laser box 500 has an enclosed light-transmitting member 508, a side surface of the laser box is formed by the enclosed light-transmitting member for docking with the second light end facet 402.

In order to achieve coupling, the optical fiber connector includes an upper substrate, a lower substrate and optical fibers. The lower substrate is provided with a groove, the optical fibers is disposed in the groove, and the upper substrate is covered on the lower substrate. As shown in FIG. 7, the optical fiber connector 303a includes an upper substrate 307a, a lower substrate 306a, and optical fibers 305a; the optical fiber connector 303b includes an upper substrate 307b, a lower substrate 306b, and optical fibers 305b. The laser box includes a cover body 501 and a cover plate 502, and optoelectronic components such as laser chips are disposed in the wrapping cavity formed by the cover body and the cover plate.

The silicon optical chip 400 has a Mach-Zehnder interferometer inside to realize power modulation. Mach-Zehnder interferometer adopts an interference principle of light of the same wavelength. One Mach-Zehnder interferometer is equipped with two interference arms, and one light beam is input to a single interference arm. A total of two light beams of a same wavelength need to be provided to the Mach-Zehnder interferometer. After the light is modulated by the Mach-Zehnder interferometer, the light on the interference arms will be merged into one light beam. One single-wavelength light beam can be provided to the silicon optical chip 400, and the single-wavelength light beam can be divided into two light beams of a same wavelength by a light splitting waveguide inside the silicon optical chip 400, which are respectively input to the two interference arms of the Mach-Zehnder interferometers. Two light beams of a same wavelength can also be provided to the silicon optical chip 400, and the two light beams of the same wavelength are directly input to the two interference arms of the Mach-Zehnder interferometer. As the Mach-Zehnder interferometer will eventually merge the light on each interference arm, under the premise of using a same optical power chip, the scheme of providing two light beams to the silicon optical chip can provide higher optical power than the scheme of providing one light beam.

The silicon optical chip 400 provided by the embodiments of the present disclosure has a plurality of optical channels at its side surface and the channels are optically coupled to the laser box 500, and a plurality of light beams of a same wavelength can be input into the silicon optical chip 400 through these optical channels to provide light beams of the same wavelength for each interference arms of the Mach-Zehnder interferometer. The luminous power of a single laser chip is limited, and superimposing the light of multiple laser chips can increase the luminous power of a single wavelength.

In the embodiment of the present disclosure, depending on the structural relationship and optical path between the silicon optical chip 400 and the laser box 500, an optical modulation can be realized through the working principle and structure of the silicon optical chip 400, that is, the laser box 500 emits light of stable power which does not carry information, and the silicon optical chip 400 modulates the light of stable power into light of fluctuating power, the light of fluctuating power carries information.

In order to achieve a better optical coupling relationship between the silicon optical chip 400 and the laser box 500, the structural relationship between the silicon optical chip 400 and the laser box 500, as well as mounting and matching components thereof are adjusted in the present disclosure. The mounting relationship among the silicon optical chip 400, the laser box 500 and the matching components will be described in detail with reference to FIGS. 8 to 11.

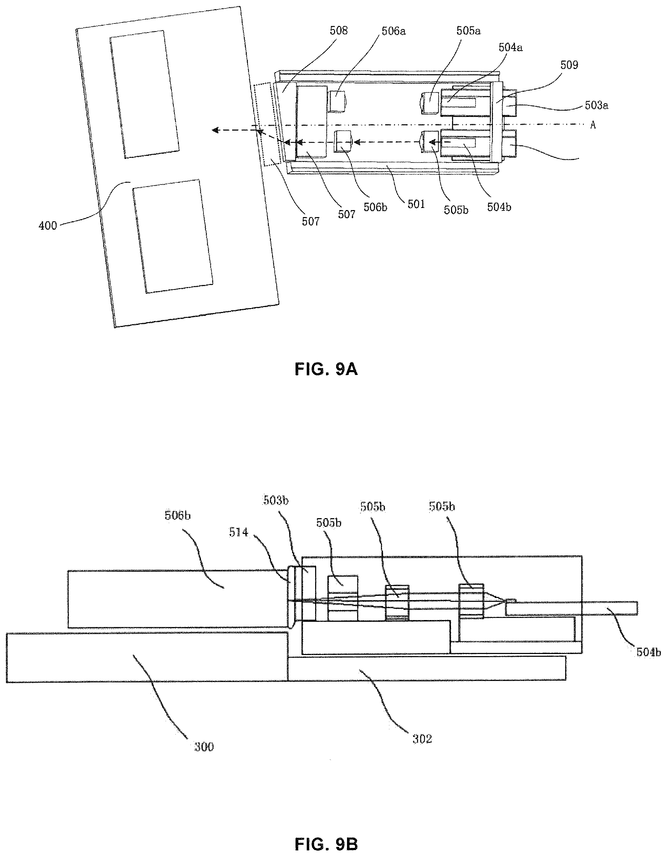

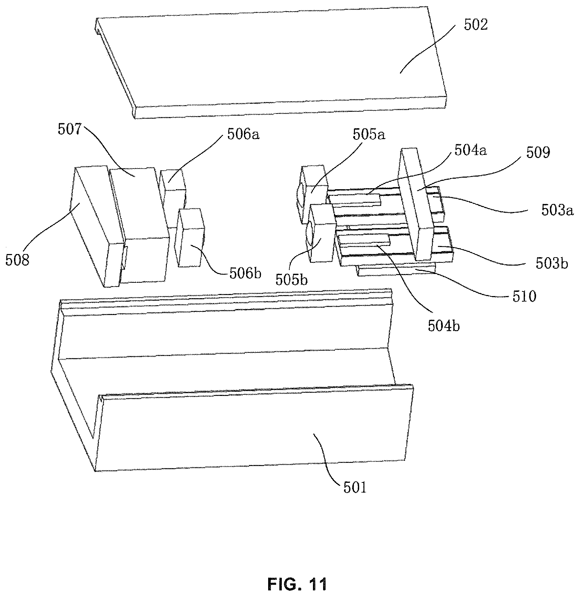

FIG. 8 is a schematic diagram showing a structure relationship between a silicon optical chip and a laser box, in accordance with some embodiments of the present disclosure; FIG. 9A is a schematic diagram showing an optical coupling relationship between a silicon optical chip and a laser box, in accordance with some embodiments of the present disclosure; FIG. 9B is a cross-sectional view of an optical coupling relationship between a silicon optical chip and a laser box, in accordance with some embodiments of the present disclosure; and FIG. 11 is a schematic diagram showing an exploded structure of a laser box, in accordance with some embodiments of the present disclosure. As shown in FIG. 8, FIG. 9A, FIG. 9B, and FIG. 11, the laser box of the embodiments of the present disclosure can provide two light beams of a same wavelength to the silicon optical chip to increase the power of the emitted light. The laser box provided by the embodiments of the present disclosure includes a cover body 501, a cover plate 502, an enclosed light-transmitting member 508, a conductive substrate located in the box, a laser chip located on the conductive substrate, a lens located in the box, and an isolator located in the box. The cover body 501 and the cover plate 502 form the wrapping cavity, and the enclosed light-transmitting member, the conductive substrate, the laser chip, the lens and the isolator are located in the wrapping cavity.

In the embodiments of the present disclosure, a relatively closed cavity is formed by the cover body 501 and the cover plate 502, and the enclosed light-transmitting member is used to enclose the laser box 500. The enclosed light-transmitting member is located in an optical path where light is directed toward the silicon optical chip 400, and is located between the cover body 501 and the cover plate 502. The light inside the cavity enters the silicon optical chip 400 after passing through the enclosed light-transmitting member. The light may enter the enclosed light-transmitting member after passing through a focusing lens, and then enter the silicon optical chip 400. The enclosed light-transmitting member is a member of the laser box 500 that is optically coupled to the silicon optical chip 400. The light exit surface of the enclosed light-transmitting member is a side surface of the laser box 500 where the laser box 500 and the silicon optical chip 400 are coupled, and the light exit surface is inclined relative to the laser box 500 as a whole.

The conductive substrate has a variety of feasible designs. One possible way is shown in FIG. 8, FIG. 9A, and FIG. 9B. The conductive substrate is partly located in the cavity and partly outside the cavity. one part of the conductive substrate located in the cavity is provided with a laser chip, and the other part outside the cavity is electrically connected to the circuit board 300; another feasible way is that the conductive substrate is completely located in the cavity, the laser chip is located on the conductive substrate, and the laser box 500 has another electrical connection structure that is electrically connected to the conductive substrate. There can be many cooperation relationships between the conductive substrate and the laser chip. One is as shown in FIG. 8, one laser chip is provided on a conductive substrate; the other is as shown in FIG. 9A, and a conductive substrate 503 is provided with two laser chips; other cooperation methods are not shown one by one in the embodiments of the present disclosure.

The laser chip, the lens, and the isolator are located in the cavity; there are two ways to set up the lens, one way is to set a lens, specifically a focusing lens, in the light emitting direction of the laser chip, and the lens is located between the laser chip and the enclosed light-transmitting member and is used to gather the light emitted by the laser chip for coupling in subsequent stage. In another way, as shown in FIG. 8, FIG. 9A and FIG. 11, two lenses, specifically a collimating lens and a focusing lens, are set in the light emitting direction of the laser chip. The light emitted by the laser chip is transformed into collimated light by the collimating lens. The collimated light can maintain a small optical power attenuation during the long-distance optical transmission process. The focusing lens receives the collimated light to converge and couple the collimated light into the silicon optical chip.

The isolator is used to prevent the light emitted by the laser chip from returning to the laser chip after being emitted, so the isolator is arranged in the light emitting direction of the laser chip. Optionally, in the embodiments of the present disclosure, the isolator is arranged in the direction where the lens faces away from the laser chip. That is, the focusing lens is arranged between the isolator and the laser chip.

As shown in FIG. 8, FIG. 9A and FIG. 11, the laser box provided by the embodiments of the present disclosure includes a cover body 501, a cover plate 502, a first conductive substrate 503a, a second conductive substrate 503b, a first laser chip 504a, a second laser chip 504b, a first collimating lens 505a, a second collimating lens 505b, a first focusing lens 506a, a second focusing lens 506b, an isolator 507, an enclosed light-transmitting member 508, a first blocking substrate 510 and a second blocking substrate 509.

Among them, the first conductive substrate 503a and the second conductive substrate 503b are located between the first blocking substrate 510 and the second blocking substrate 509. The first blocking substrate 510, the first conductive substrate 503a, the second conductive substrate 503b, and the second blocking substrates 509, the cover body 501 and the cover plate 502 together form an enclosed structure; the enclosed light-transmitting member 508, the cover body 501 and the cover plate 502 form an enclosed structure, so that the cover body 501, the cover plate 502, and the first conductive substrate 503a, the second conductive substrate 503b, the first blocking substrate 510, the second blocking substrate 509, and the enclosed light-transmitting member 508 together form an enclosed cavity; the first conductive substrate 503a is partly located in the cavity and partly outside the cavity; the second conductive substrate 503b is partly located in the cavity and partly outside the cavity; the common conductive substrate is a metalized ceramic, and a circuit pattern is formed on a surface of the ceramic to meet different electrical connection needs; the common blocking substrate is made of ceramic, Kovar metal, and solidified glue or die-casting metal, etc., which can realize sealing; common enclosed light-transmitting members are glass or solidified glue.

The part of the first conductive substrate 503a located in the cavity is provided with a first laser chip 504a, and the first collimating lens 505a, the first focusing lens 506a, the isolator 507 and the enclosed light transmission 508 are arranged in order along the light emitting direction of the first laser chip 504a. The part of the second conductive substrate 503b in the cavity is provided with a second laser chip 504b, and the second collimating lens 505b, the second focusing lens 506b, the isolator 507 and the enclosed light-transmitting member 508 are arranged in order along the light emitting direction of the second laser chip 504b. the first collimating lens 505a, the first focusing lens 506a, the second collimating lens 505b, the second focusing lens 506b, and the isolator 507 are all disposed on the cover body 501.In the embodiments of the present disclosure, two light beams emitted by the two laser chips share the isolator and the enclosed light-transmitting member. Optionally, a single isolator and a single enclosed light-transmitting member can be separately provided for a single light, that is, two isolators and two enclosed light-transmitting members can be provided, which still belongs to the protection scope of this disclosure.

In practical applications, the first laser chip 504a and the second laser chip 504b emit light of a same wavelength, thereby forming two light beams emitted by the first laser chip 504a and the second laser chip 504b, and the two light beams of the same wavelength finally improve the light output power of the silicon optical chip 400.

The light emitted by the first laser chip 504a is directed toward the first focusing lens 506a after being collimated by the first collimating lens 505a, then is directed toward the isolator 507 through the first focusing lens 506a, then is directed toward the enclosed light-transmitting member 508 through the isolator 507, and finally exits from the laser box 500. By adjusting the first focusing lens 506a, a direction in which the light finally exits may be changed. Similarly, the light emitted by the second laser chip 504b is directed toward the second focusing lens 506b after being collimated by the second collimating lens 505b, then is directed toward the isolator 507 through the second focusing lens 506b, then is directed toward the enclosed light-transmitting member 508 through the isolator 507, and finally exits from the laser box 500. By adjusting the second focusing lens 506b, a direction in which the light finally exits may be changed. By adjusting the first focusing lens 506a and the second focusing lens 506b, the directions in which the two light beams finally exit may be separately adjusted, which facilitates to separately achieve the optical coupling.

The light exit direction of the first laser chip 504a is parallel to an axial direction of the laser box 500, a single light beam emitted by the first laser chip 504a is in a divergent state, and is converged by the first collimating lens 505a to form collimated parallel light, and the parallel light may travel for a long distance with low loss to meet requirements of optical path design and structural design; and the first focusing lens 506a converges the collimated parallel light into converged light, and the converged light has a reduced area of a light spot of the single light beam, which is conductive to concentrating energy of the single light beam and improving efficiency of the optical coupling.

Similarly, the light exit direction of the second laser chip 504b is parallel to the axial direction of the laser box 500, a single light beam emitted by the second laser chip 504b is in a divergent state, and is converged by the second collimating lens 505b to form collimated parallel light, and the parallel light may travel for a long distance with low loss to meet the requirements of optical path design and structural design; and the second focusing lens 506b converges the collimated parallel light into converged light, and the converged light has a reduced area of a light spot of the single light beam, which is conductive to concentrating energy of the single light beam and improving efficiency of the optical coupling.

The isolator receives the light from the focusing lenses, and allows the light to pass in a single direction and cut off in an opposite direction, thereby playing an isolation role to prevent the light passed through the isolator from being reflected back into the laser chip.

The enclosed light-transmitting member plays a role of enclosing the laser box and transmitting light, and forms a side surface of the laser box for emitting light. There are optoelectronic components such as laser chips inside the laser box. And the working environment of the optoelectronic components needs to be enclosed to a certain extent to prevent an influence of moisture on the components and the optical path. The enclosed light-transmitting members play a role in enclosing the laser box; moreover, the light emitted by the laser chip need to exit the laser box. As a component arranged at the edge of the laser box, the enclosed light-transmitting member needs to have light-transmitting properties to allow the laser to exit.

The light beam is emitted from a light exit surface of the enclosed light-transmitting member to realize the emission from the laser box. The emitted light beam enters the silicon optical chip 400. In order to prevent the light beam from being reflected when entering the silicon optical chip 400 and alleviate the phenomena of optical power loss caused by the reflection, it is required that the light beam enters a light incident surface of the silicon optical chip 400 at a non-vertical angle. Optionally, the light-receiving waveguide structure in the silicon optical chip 400 is set at an acute angle with the light incident surface of the silicon optical chip 400, which makes that the light beam is incident in the direction facing the waveguide structure after being refracted at the incident surface of the silicon optical chip 400, which is inconsistent with the light exit direction of the laser chip.

In the embodiments of the present disclosure, an enclosed light-transmitting member is designed in the laser box, and the light exit direction of the laser box is changed through the optical structure of the enclosed light-transmitting member, so as to meet the light-incidence requirement of the silicon optical chip. The enclosed light-transmitting member provided by the embodiments of the present disclosure includes two non-parallel but opposite side surfaces, one of which is a light incident surface, the other is a light exit surface, and the light incident surface and the light exit surface of the enclosed light-transmitting member are in non-parallel directions, that is, they form an included angle of not 0°, and the light exit surface is obviously inclined with respect to the light incident surface.

As shown in FIG. 9A and FIG. 9B, the enclosed light-transmitting member 508 is a hexahedron, in which two pairs of opposite side surfaces are in a parallel relationship, and the last pair of opposite side surfaces are in a non-parallel relationship. The light beams enter the enclosed light-transmitting member 508 at an angle perpendicular to the light incident surface of the enclosed light-transmitting member, then are refracted at the light exit surface, and then are refracted again by a surface of the silicon optical chip 400, so as to meet the requirements of the silicon optical chip 400 for a light incident angle. The light incident surface of the enclosed light-transmitting member 508 is perpendicular to the incident light beam, as shown in FIG. 9A, the light incident surface of the enclosed light transmitting member 508 is perpendicular to the light emitting direction of the laser chip, and the light emitted by the laser chip does not change its direction during transmission. Other optical path structures are also possible, and the light emitted by the laser chip changes direction in the transmission process, but the light reaching the enclosed light-transmitting member is still perpendicular to the light incident surface of the enclosed light-transmitting member.

In the embodiments of the present disclosure, the enclosed light-transmitting member is a component through which the light beam inevitably passes, and is the last component through which the light beam finally passes in the laser box. Therefore, by using the enclosed light-transmitting member to change the light transmission direction, it is relatively simple to meet the light incident angle requirements of the silicon optical chip. The light incident surface and the light exit surface of the enclosed light-transmitting member are in a non-parallel relationship. By setting the value of the included angle between the light incident surface and the light exit surface, the propagation direction of light is close to the waveguide structure of the silicon optical chip after the light enters the light incident surface and then exits from the light exit surface of the enclosed light-transmitting member. Combining with the light refraction factor, it can be realized that the propagation direction of the light is directly opposite to the waveguide structure of the silicon optical chip.

An optical glue is filled between the side surface of the laser box and the side surface of the silicon optical chip, and the refractive index of the optical glue is greater than the refractive index of air and smaller than the refractive index of the silicon optical chip. As shown in FIG. 9B, the optical glue 514 is filled between the silicon optical chip 400 and the enclosed light-transmitting member 508, so that there is no air between the side surface of the laser box 500 and the side surface of the silicon optical chip 400, and the light exits from the enclosed light-transmitting member 508 and directly enters the glue instead of the air.

Under normal conditions, a relationship among refractive indexes is that a refractive index of gas is less than a refractive index of liquid, and the refractive index of the liquid is less than a refractive index of solid (gas < liquid < solid). For example, the refractive index of air is 1, the refractive index of the silicon optical chip is 1.46; the refractive index of glass (i.e., the enclosed light transmitting member 508) is 1.53; in this embodiment, the refractive index of the glue is between 1.46 and 1.53, for example, the refractive index of the glue is 1.53, or may be slightly greater than 1.53. Glue is classified into structural glue, thermal conductive glue, optical glue, conductive glue, etc. In addition to preventing dust, glue also prevents light from scattering when passing through the gap between the glass (i.e., the enclosed light transmitting member 508) and the waveguide.

Based on the above structural relationship, the optical module provided in the present disclosure can form a complete optical path structure through the silicon optical chip 400 and the enclosed light-transmitting member 508. In actual applications, it can be further adjusted according to the needs of the application environment to form a variety of optical path structures.

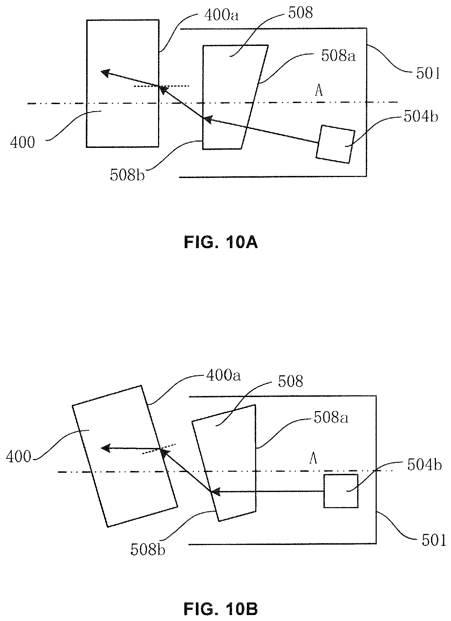

FIG. 10A is a schematic diagram of an optical path structure of a laser box, in accordance with some embodiments of the present disclosure; FIG. 10B is a schematic diagram of an optical path structure of another laser box, in accordance with some embodiments of the present disclosure. The silicon optical chip, the enclosed light-transmitting member and the light propagation direction in FIG. 10B rotate at a certain angle compared to FIG. 10A. As shown in FIG. 10A and FIG.10B, considering the light beam emitted by the second laser chip 504b as an example, the enclosed light-transmitting member includes two non-parallel but opposite sides, one of which is the light incident surface 508a and the other is the light exit surface 508b. There is a gap between the light incident surface 400a of the silicon optical chip 400 and the enclosed light-transmitting member, and the light beam enters the silicon optical chip 400 through the light incident surface 508a of the enclosed light-transmitting member 508, the light exit surface 508b of the enclosed light-transmitting member 508, the gap, and the light incident surface 400a of the silicon light chip 400 in sequence. The light beam is refracted on the light exit surface 508b of the enclosed light-transmitting member 508 and the light incident surface 400a of the silicon optical chip 400, so that the light exit direction of the laser chip is parallel to the propagation direction of the light after entering the silicon optical chip.

In FIG. 10A, the light emitted by the second laser chip 504b is not parallel to the axial direction of the laser box 500, and the light emitted by the second laser chip 504b is perpendicular to the light exit surface of the second laser chip 504b, the light incident surface 508a of the enclosed light-transmitting member 508 is perpendicular to the propagation direction of the light, and the light beam is not refracted and reaches the light exit surface 508b of the enclosed light-transmitting member in an original propagation direction. The light exit surface 508b of the enclosed light-transmitting member is parallel to the light incident surface 400a of the silicon optical chip 400. The light beam is refracted at the light exit surface 508b, and the refracted light beam reaches the light incident surface 400a of the silicon optical chip 400 and enters the silicon optical chip 400 after being refracted again. The refractive index of the silicon optical chip 400 is similar to the refractive index of the enclosed light-transmitting member 508. The light beam is refracted at the light exit surface 508b of the enclosed light-transmitting member 508, and then refracted at the light incident surface 400a of the silicon optical chip 400, which is equivalent to that light enters medium B from medium A, and then enters medium A from medium B, wherein the incident angle in medium A is equal to the refraction angle in medium B.

In the silicon optical chip 400, a light is usually required to enter the light incident surface 400a of the silicon optical chip 400 at an incident angle of 11.6°, and the refraction angle θ after the light enters the silicon optical chip 400 is 8°, which requires that the light exit direction of the laser chip forms an angle of 8° with the light exit surface of the enclosed light-transmitting member, that is, the laser chip provides an incident angle α of 8° on the light exit surface of the enclosed light-transmitting member. In a case where the light emitted by the laser chip directly enters the light incident surface 400a of the silicon optical chip 400, an incident angle of 11.6° needs to be provided. And based on the structural design of the enclosed light-transmitting member 508, the angle requirement of the light exit direction of the laser chip relative to the silicon optical chip 400 is reduced. In addition, refraction is more conducive to maintaining the shape of the spot than reflection, and is conducive to improving the coupling efficiency.

As shown in FIG. 10A, the light exit direction of the laser chip is not parallel to the axis direction of the laser box. The non-parallel design makes it need to rotate the laser chip or the lens by taking the axis direction of the laser box as a reference in the production process of the optical module, which will make the production process difficult. However, the axial direction of the laser box is parallel to the light exit direction of the laser chip, which is easy for producing the optical module.

In order to realize that the light exit direction of the laser chip is parallel to the axial direction of the laser box, the enclosed light-transmitting member and the silicon optical chip in FIG. 10A can be rotated by a certain angle, thereby the design shown in FIG. 10B is obtained. As shown in FIG. 10B, the light incident surface 508a of the enclosed light-transmitting member 508 is perpendicular to the light exit direction of the laser chip, the light exit surface of the laser box forms a non-vertical angle with respect to the axis of the laser box, and the light incident surface 400a of the silicon optical chip 400 forms a non-vertical angle with respect to the axial direction of the laser box. The laser box 500 and the silicon optical chip 400 are disposed in the opening of the circuit board, and the opening of the circuit board is an irregular square to adapt to the above structure.

Both the silicon optical chip 400 and the laser box 500 are separately manufactured products, and the laser box 500 provides light to the silicon optical chip 400. Since the light directed to the silicon optical chip 400 has a specific direction requirement, and the light exit direction of the laser chip is limited by the manufacturing process of the laser box 500 and the optical coupling mode of between the laser box 500 and the silicon optical chip 400, there is a great angular variation between these two directions, and there would be technical problem of a low coupling efficiency by adopting a conventional light reflection method to realize the angular variation. Therefore, for the purpose of the angular variation, this disclosure adopts the enclosed light-transmitting member for refraction of light, and the angle relationship between the light incident surface and the light exit surface of the enclosed light-transmitting member 508 are designed. Therefore, the problem of reduced coupling efficiency is alleviated, and the enclosed light-transmitting member as an optical device can be independently and freely designed with relative convenience of design and operation.

In addition, since the laser chip would generate a large amount of heat during operation, the generated heat may increase a temperature in a working environment, and a high temperature in the working environment may cause power of the laser chip to decrease and cause the wavelength of the light beams generated by the laser chip to shift. Therefore, a heat dissipation channel need to be provided for the laser chip to improve the power of the laser chip and relieve the wavelength shift.

In the assembly process of the optical module of the present disclosure, the assembly sequence of the laser box 500 is to set the cover body 501 as a bottom and dispose the components on the cover body 501, and then close the cover plate 502; and the assembly sequence of the optical module is to set the lower shell 202 as a bottom and set the components on the lower shell 202, and then cover the upper shell 201. This assembly sequence allows the cover plate 502 of the laser box 500 to face the upper shell 201 of the optical module, and the cover body 501 of the laser box to face the lower shell 202 of the optical module. The upper shell 201 of the optical module has a better heat dissipation channel than the lower shell 202 of the optical module, and the cover body 501 of the laser box can dissipate heat through the upper shell 201 of the optical module.

In order to enable the upper shell 201 of the optical module to be used for dissipating heat, some embodiments of the present disclosure also provide a laser box structure, in which the lower surface of the cover plate 502 is in thermal contact with at least two laser chips, and the upper surface of the cover plate 502 is in thermal contact with the upper shell 201 of the optical module. A thermal contact structure may be that, a conductive substrate is provided on the lower surface of the cover plate 502 and the laser chip being disposed on the lower surface of the conductive substrate; that is, a side of the conductive substrate facing the upper shell 201 of the optical module is set on the lower surface of the cover plate 502 of the laser box, and the laser chip is set on a side of the conductive substrate facing the lower shell of the optical module. The upper surface of the cover plate 502 is in contact with the upper shell 201 of the optical module through a thermally conductive member such as thermally conductive glue. Therefore, the heat generated by the laser chip is conducted to the cover plate 502 of the laser box through the conductive substrate, and is transferred from the cover plate 502 of the laser box to the upper shell 201 of the optical module.

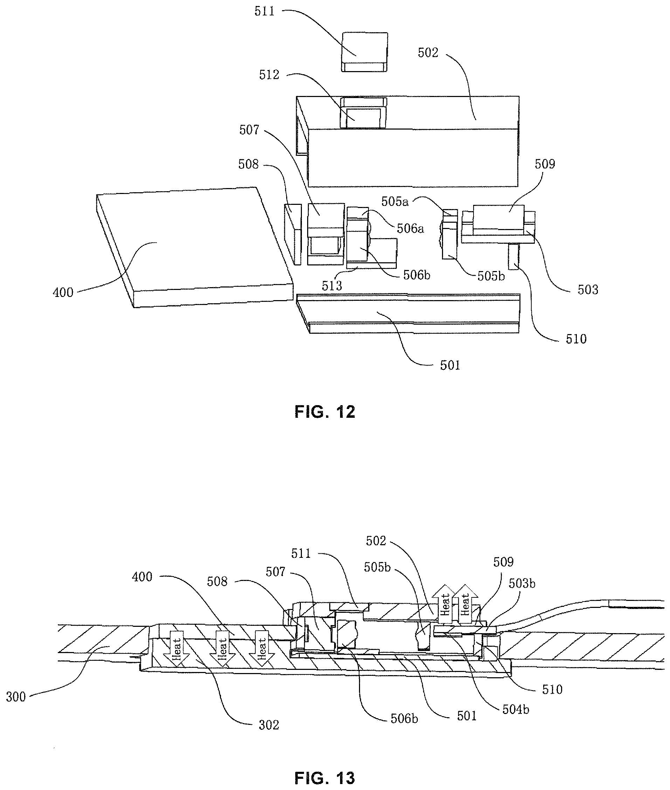

FIG. 13 is a schematic cross-sectional view of a laser box, in accordance with some embodiments of the present disclosure; FIG. 12 and FIG. 13 show a structure of a laser box. Considering the second laser chip 504b as an example, the second laser chip 504b is disposed on the lower surface of the conductive substrate 503b, the conductive substrate 503b is disposed on the inner surface of the cover plate 502 of the laser box, and the second blocking member 509 is arranged between the conductive substrate and the inner surface of the cover plate. The second blocking member 509 is attached to the upper surface of the conductive substrate 503b in a large area to form a thermally conductive contact structure, so that the conductive substrate 503b is arranged on the lower surface of the cover plate 502, thereby conducting heat of the conductive substrate 503b to the cover plate 502 of the laser box. Alternatively, the upper surface of the conductive substrate 503b may be directly attached to the inner surface of the cover plate 502, and whether to use the second blocking member can be flexibly determined according to the thermal contact structure requirements and the enclosing requirements. In this way, the laser chip 504b conducts heat to the conductive substrate 503b, and the conductive substrate 503b directly or indirectly conducts the heat to the cover plate 502 of the laser box, and the cover plate 502 of the laser box conducts the heat to the upper shell 201 of the optical module, and the heat generated by the laser chip 504b is dissipated from the upper shell 201.

In addition, the conductive substrate 503b and the cover body 501 are hermetically connected by the first blocking member 510, the laser chip 504b is suspended above the cover body 501, and no heat conduction channel is formed between the laser chip 504b and the cover body 501, and the heat of the laser chip 504b is mainly dissipated through the cover plate 502. Through the opening of the circuit board 300, the silicon optical chip 400 and the laser box are carried by the base 302, and the base is in thermal contact with the lower shell 202 of the optical module. The heat generated by the silicon optical chip 400 is mainly distributed from the base 302 to the lower shell 202 of the optical module. Therefore, the heat of the laser box is mainly dissipated through the upper shell 201 of the optical module, and the heat of the silicon optical chip 400 is mainly dissipated through the lower shell 202 of the optical module, which relieves the heat of the silicon optical chip 400 and the laser box 500 from being concentrated on a same side of the optical module, and makes full use of the heat dissipation channels on the upper and lower sides of the optical module.

Since the conductive substrate is disposed on the inner surface of the cover plate 502, and the laser chip is disposed on the conductive substrate, the laser chip can be fixed on the cover plate 502 of the laser box in advance by considering the assembly sequence of the laser boxes. When the cover plate 502 is not covered on the cover body 501, the optical path of the laser box is not completely formed, and the laser chip cannot be powered on so as to realize active coupling of the optical path; after the cover plate 502 is covered on the cover body 501, the position of the components inside the laser box cannot be moved from outside, and the active coupling cannot be achieved either. Therefore, when the laser box is assembled according to a preset position, there is a large positional error. This positional error causes a large difference between the preset optical path and the actual optical path, which greatly affects the efficiency of optical coupling. Especially in a case where the laser box provides more than two light beams, the position between the beams cannot be modified, that both the two light beams are aligned with two light inlets of the silicon optical chip is very difficult, and the alignment of more than three light beams is more difficult.

For this purpose, some embodiments of the present disclosure provides a laser box to realize the active coupling of the above-mentioned laser box. As shown in FIG. 12 and FIG. 13, a through hole 512 is provided on the cover plate of the laser box, focusing lenses 506a and 506b are arranged below the through hole 512, and the focusing lenses 506a and 506b are arranged on the cover body 501. In order to adjust the height of the focusing lens, a spacer block 513 may be provided between the focusing lens and the cover body 501. After the cover plate 502 of the laser box is covered on the cover body 501, the position of the laser chip is fixed. The laser chip is powered on to emit light, the light is emitted through the focusing lenses. An external adjustment tool may extend into the laser box through the through hole 512. Since the focusing lenses are located below the through hole, the external adjustment tool enters the laser box through the through hole to adjust the position of the focusing lenses. That is, changing the position or angle of the focusing lenses could change the exit position of the light beam. After completing the relative fixation of the laser box and the silicon optical chip, the focusing lenses can be adjusted. When the laser chip is in the light-emitting state, the light is directed to the light inlets of the silicon optical chip to realize the active coupling. In order to realize the enclosing of the laser box, the laser box further includes a block 511, and the block 511 is used to block the through hole 512.

Optionally, in combination with the size of lenses, the collimating lenses 505a and 505b can be arranged on the inner surface (lower surface) of the cover plate to match the light exit path of the laser chip.

## Claims

1. An optical module, comprising a base (302), a silicon optical chip (400), a laser box (500) and a circuit board (300), wherein a bottom surface of the silicon optical chip (400) and a bottom surface of the laser box (500) are respectively disposed on the base (302), a side surface of the laser box (500) emits light, a side surface of the silicon optical chip (400) receives the light from the laser box (500), the circuit board (300) is provided with an opening (301) penetrating through an upper surface and a lower surface of the circuit board (300), and the silicon optical chip (400) and the laser box (500) are arranged in the opening (301); wherein
the base (302) is disposed on a side of the circuit board (300), and the silicon optical chip (400) and the laser box (500) pass through the opening (301) of the circuit board (300), so that the silicon optical chip (400) and the laser box (500) are disposed on the base (302).

2. The optical module according to claim 1, wherein the laser box (500) includes a laser chip (504a, 504b) and an enclosed light-transmitting member (508), the enclosed light-transmitting member (508) forms a side surface of the laser box (500), and a light exit direction of the laser chip (504a, 504b) is perpendicular to a light incident surface (508a) of the enclosed light-transmitting member (508), the light incident surface (508a) of the enclosed light-transmitting member (508) is not parallel to a light exit surface (508b) of the enclosed light-transmitting member (508).

3. The optical module according to claim 1, wherein the laser box (500) includes a first laser chip (504a) and a second laser chip (504b), the first laser chip (504a) and the second laser chip (504b) emit light with a same wavelength.

4. The optical module according to any one of claims 2 or 3, wherein a light exit direction of the laser chip (504a, 504b) is parallel to an axial direction of the laser box (500).

5. The optical module according to claim 2, wherein the side surface of the silicon optical chip (400) and the light exit surface (508b) of the enclosed light-transmitting member (508) are arranged in parallel.

6. The optical module according to claim 2, wherein the laser box (500) further includes a focusing lens (506a, 506b), the focusing lens (506a, 506b) is located between the laser chip (504a, 504b) and the enclosed light-transmitting member (508).

7. The optical module according to claim 6, wherein the laser box (500) further includes a collimating lens (505a, 505b), the collimating lens (505a, 505b) is located between the focusing lens (506a, 506b) and the laser chip (504a, 504b).

8. The optical module according to claim 6, wherein the laser box (500) further includes an isolator (507), the focusing lens (506a, 506b) is arranged between the isolator (507) and the laser chip (504a, 504b).

9. The optical module according to claim 1, further comprising an upper shell (201) and a lower shell (202), wherein the laser box (500) and the silicon optical chip (400) are located between the upper shell (201) and the lower shell (202); wherein,
the laser box (500) includes a cover body (501), a cover plate (502), at least two laser chips (504a, 504b), at least two focusing lenses (506a, 506b), and a block (511);
an upper surface of the cover plate (502) is in thermal contact with the upper shell (201), and a lower surface of the cover plate (502) is in thermal contact with the at least two laser chips (504a, 504b);
the cover plate (502) has a through hole (512) penetrating an upper surface and a lower surface of the cover plate (502), and the block (511) is disposed in the through hole (512);
the at least two focusing lenses (506a, 506b) are arranged below the through hole (512) and are positioned on the cover body (501);
the light emitted by the laser chip (504a, 504b) exits the laser box (500) through the focusing lenses (506a, 506b), and the silicon optical chip (400) receives the light from the laser box (500).

10. The optical module according to claim 9, wherein the base (302) is in thermal contact with the lower shell (202).

11. The optical module according to claim 9, wherein the base (302) includes a groove (308), and the laser box (500) is located in the groove (308).

12. The optical module according to claim 9, wherein the laser box (500) further includes a conductive substrate (503), wherein a lower surface of the conductive substrate (503) is provided with the laser chip (504a, 504b); an upper surface of the conductive substrate (503) is in thermal contact with the lower surface of the cover plate (502) to realize the thermal contact between the laser chip (504a, 504b) and the lower surface of the cover plate (502).

13. The optical module according to claim 9, wherein the light passing through the focusing lenses (506a, 506b) exits the laser box (500) through the enclosed light-transmitting member (508).

## Patentansprüche

1. Optisches Modul, umfassend eine Basis (302), einen optischen Siliziumchip (400), eine Laserbox (500) und eine Leiterplatte (300), wobei eine Unterseite des optischen Siliziumchips (400) und eine Unterseite der Laserbox (500) jeweils auf der Basis (302) angeordnet sind, eine Seitenfläche der Laserbox (500) Licht emittiert, eine Seitenfläche des optischen Siliziumchips (400) das Licht von der Laserbox (500) empfängt, die Leiterplatte (300) mit einer Öffnung (301) versehen ist, die durch eine Oberseite und eine Unterseite der Leiterplatte (300) hindurch verläuft, und der optische Siliziumchip (400) und die Laserbox (500) in der Öffnung (301) angeordnet sind; wobei
die Basis (302) auf einer Seite der Leiterplatte (300) angeordnet ist und der optische Siliziumchip (400) und die Laserbox (500) durch die Öffnung (301) der Leiterplatte (300) hindurch verlaufen, so dass der optische Siliziumchip (400) und die Laserbox (500) auf der Basis (302) angeordnet sind.

2. Optisches Modul nach Anspruch 1, wobei die Laserbox (500) einen Laserchip (504a, 504b) und ein umschlossenes lichtdurchlässiges Element (508) umfasst, das umschlossene lichtdurchlässige Element (508) eine Seitenfläche der Laserbox (500) bildet, und eine Lichtaustrittsrichtung des Laserchips (504a, 504b) senkrecht zu einer Lichteinfallsfläche (508a) des umschlossenen lichtdurchlässigen Elements (508) verläuft, wobei die Lichteinfallsfläche (508a) des umschlossenen lichtdurchlässigen Elements (508) nicht parallel zu einer Lichtaustrittsfläche (508b) des umschlossenen lichtdurchlässigen Elements (508) verläuft.

3. Optisches Modul nach Anspruch 1, wobei die Laserbox (500) einen ersten Laserchip (504a) und einen zweiten Laserchip (504b) aufweist, wobei der erste Laserchip (504a) und der zweite Laserchip (504b) Licht mit der gleichen Wellenlänge emittieren.

4. Optisches Modul nach einem der Ansprüche 2 oder 3, wobei eine Lichtaustrittsrichtung des Laserchips (504a, 504b) parallel zu einer axialen Richtung der Laserbox (500) verläuft.

5. Optisches Modul nach Anspruch 2, wobei die Seitenfläche des optischen Siliziumchips (400) und die Lichtaustrittsfläche (508b) des umschlossenen lichtdurchlässigen Elements (508) parallel angeordnet sind.

6. Optisches Modul nach Anspruch 2, wobei die Laserbox (500) des Weiteren eine Fokussierlinse (506a, 506b) aufweist, wobei sich die Fokussierlinse (506a, 506b) zwischen dem Laserchip (504a, 504b) und dem umschlossenen lichtdurchlässigen Element (508) befindet.

7. Optisches Modul nach Anspruch 6, wobei die Laserbox (500) des Weiteren eine Kollimationslinse (505a, 505b) aufweist, wobei sich die Kollimationslinse (505a, 505b) zwischen der Fokussierlinse (506a, 506b) und dem Laserchip (504a, 504b) befindet.

8. Optisches Modul nach Anspruch 6, wobei die Laserbox (500) des Weiteren einen Isolator (507) aufweist, wobei die Fokussierlinse (506a, 506b) zwischen dem Isolator (507) und dem Laserchip (504a, 504b) angeordnet ist.

9. Optisches Modul nach Anspruch 1, des Weiteren umfassend eine obere Schale (201) und eine untere Schale (202), wobei sich die Laserbox (500) und der optische Siliziumchip (400) zwischen der oberen Schale (201) und der unteren Schale (202) befinden; wobei
die Laserbox (500) einen Abdeckkorpus (501), eine Abdeckplatte (502), mindestens zwei Laserchips (504a, 504b), mindestens zwei Fokussierlinsen (506a, 506b) und einen Block (511) aufweist;
eine Oberseite der Abdeckplatte (502) in thermischem Kontakt mit der oberen Schale (201) steht und eine Unterseite der Abdeckplatte (502) in thermischem Kontakt mit den mindestens zwei Laserchips (504a, 504b) steht;
die Abdeckplatte (502) ein Durchgangsloch (512) aufweist, das durch eine Oberseite und eine Unterseite der Abdeckplatte (502) hindurch verläuft, und der Block (511) in dem Durchgangsloch (512) angeordnet ist;
die mindestens zwei Fokussierlinsen (506a, 506b) unterhalb des Durchgangslochs (512) angeordnet sind und auf dem Abdeckkorpus (501) positioniert sind;
das durch den Laserchip (504a, 504b) emittierte Licht durch die Fokussierlinsen (506a, 506b) hindurch aus der Laserbox (500) austritt und der optische Siliziumchip (400) das Licht von der Laserbox (500) empfängt.

10. Optisches Modul nach Anspruch 9, wobei die Basis (302) in thermischem Kontakt mit der unteren Schale (202) steht.

11. Optisches Modul nach Anspruch 9, wobei die Basis (302) eine Nut (308) aufweist und die Laserbox (500) sich in der Nut (308) befindet.

12. Optisches Modul nach Anspruch 9, wobei die Laserbox (500) des Weiteren ein leitfähiges Substrat (503) aufweist, wobei eine Unterseite des leitfähigen Substrats (503) mit dem Laserchip (504a, 504b) versehen ist; eine Oberseite des leitfähigen Substrats (503) in thermischem Kontakt mit der Unterseite der Abdeckplatte (502) steht, um den thermischen Kontakt zwischen dem Laserchip (504a, 504b) und der Unterseite der Abdeckplatte (502) zu realisieren.

13. Optisches Modul nach Anspruch 9, wobei das durch die Fokussierlinsen (506a, 506b) hindurchtretende Licht durch das umschließende lichtdurchlässige Element (508) hindurch aus der Laserbox (500) austritt.

## Revendications

1. Module optique, comprenant une base (302), une puce optique en silicium (400), un boîtier laser (500) et une carte de circuits (300), dans lequel une surface de dessous de la puce optique en silicium (400) et une surface de dessous du boîtier laser (500) sont respectivement disposées sur la base (302), une surface latérale du boîtier laser (500) émet de la lumière, une surface latérale de la puce optique en silicium (400) reçoit la lumière provenant du boîtier laser (500), la carte de circuits (300) est munie d'une ouverture (301) pénétrant à travers une surface supérieure et une surface inférieure de la carte de circuits (300), et la puce optique en silicium (400) et le boîtier laser (500) sont agencés dans l'ouverture (301) ; dans lequel
la base (302) est disposée sur un côté de la carte de circuits (300), et la puce optique en silicium (400) et le boîtier laser (500) traversent l'ouverture (301) de la carte de circuits (300), de sorte que la puce optique en silicium (400) et le boîtier laser (500) soient disposés sur la base (302).

2. Module optique selon la revendication 1, dans lequel le boîtier laser (500) comporte une puce laser (504a, 504b) et un organe de transmission de lumière encastré (508), l'organe de transmission de lumière encastré (508) forme une surface latérale du boîtier laser (500), et une direction de sortie de lumière du boîtier laser (504a, 504b) est perpendiculaire à une surface d'incidence de lumière (508a) de l'organe de transmission de lumière encastré (508), la surface d'incidence de lumière (508a) de l'organe de transmission de lumière encastré (508) n'est pas parallèle à une surface de sortie de lumière (508b) de l'organe de transmission de lumière encastré (508).

3. Module optique selon la revendication 1, dans lequel le boîtier laser (500) comporte une première puce laser (504a) et une seconde puce laser (504b), la première puce laser (504a) et la seconde puce laser (504b) émettent une lumière ayant une même longueur d'onde.

4. Module optique selon l'une quelconque des revendications 2 ou 3, dans lequel une direction de sortie de lumière de la puce laser (504a, 504b) est parallèle à une direction axiale du boîtier laser (500).

5. Module optique selon la revendication 2, dans lequel la surface latérale de la puce optique en silicium (400) et la surface de sortie de lumière (508b) de l'organe de transmission de lumière encastré (508) sont agencées en parallèle.

6. Module optique selon la revendication 2, dans lequel le boîtier laser (500) comporte en outre une lentille de focalisation (506a, 506b), la lentille de focalisation (506a, 506b) est située entre la puce laser (504a, 504b) et l'organe de transmission de lumière encastré (508).

7. Module optique selon la revendication 6, dans lequel le boîtier laser (500) comporte en outre une lentille de collimation (505a, 505b), la lentille de collimation (505a, 505b) est située entre la lentille de focalisation (506a, 506b) et la puce laser (504a, 504b).

8. Module optique selon la revendication 6, dans lequel le boîtier laser (500) comporte en outre un isolateur (507), la lentille de focalisation (506a, 506b) est agencée entre l'isolateur (507) et la puce laser (504a, 504b).

9. Module optique selon la revendication 1, comprenant en outre une coque supérieure (201) et une coque inférieure (202), dans lequel le boîtier laser (500) et la puce optique en silicium (400) sont situés entre la coque supérieure (201) et la coque inférieure (202) ; dans lequel, le boîtier laser (500) comporte un corps de recouvrement (501), une plaque de recouvrement (502), au moins deux puces laser (504a, 504b), au moins deux lentilles de focalisation (506a, 506b) et un bloc (511) ;
une surface supérieure de la plaque de recouvrement (502) est en contact thermique avec la coque supérieure (201), et une surface inférieure de la plaque de recouvrement (502) est en contact thermique avec les au moins deux puces laser (504a, 504b) ;
la plaque de recouvrement (502) possède un trou traversant (512) pénétrant dans une surface supérieure et une surface inférieure de la plaque de recouvrement (502), et le bloc (511) est disposé dans le trou traversant (512) ;
les au moins deux lentilles de focalisation (506a, 506b) sont agencées au-dessous du trou traversant (512) et sont positionnées sur le corps de recouvrement (501) ;
la lumière émise par la puce laser (504a, 504b) sort du boîtier laser (500) par les lentilles de focalisation (506a, 506b), et la puce optique en silicium (400) reçoit la lumière provenant du boîtier laser (500).

10. Module optique selon la revendication 9, dans lequel la base (302) est en contact thermique avec la coque inférieure (202).

11. Module optique selon la revendication 9, dans lequel la base (302) comporte une rainure (308), et le boîtier laser (500) est situé dans la rainure (308).

12. Module optique selon la revendication 9, dans lequel le boîtier laser (500) comporte en outre un substrat conducteur (503), dans lequel une surface inférieure du substrat conducteur (503) est munie de la puce laser (504a, 504b) ; une surface supérieure du substrat conducteur (503) est en contact thermique avec la surface inférieure de la plaque de recouvrement (502) pour réaliser le contact thermique entre la puce laser (504a, 504b) et la surface inférieure de la plaque de recouvrement (502).

13. Module optique selon la revendication 9, dans lequel la lumière traversant les lentilles de focalisation (506a, 506b) sort du boîtier laser (500) par l'organe de transmission de lumière encastré (508).
